# EUROPEAN PATENT APPLICATION

(11) **EP 4 109 129 A1**
(43) Date of publication of application: **28.12.2022**
(21) Application number: 22174566.4
(22) Date of filing: 20.05.2022
(51) Int. Cl.: G01S 7/481, G01S 17/86, G01S 17/88

(54) **DISTANCE MEASUREMENT APPARATUS AND DISTANCE MEASUREMENT SYSTEM**

(30) Priority: 23.06.2021 JP 2021103874
(71) Applicant: Ricoh Company, Ltd., Tokyo 143-8555 (JP)
(72) Inventor: SATOH, Hiroyuki, Tokyo, 143-8555 (JP); AMADA, Taku, Tokyo, 143-8555 (JP)
(74) Representative: J A Kemp LLP

(57) **Abstract**

A distance measurement apparatus (100) including: multiple phototransmitters to emit light beams to a range to be measured, preferably from VCSEL optical systems (23F, 23B); multiple photosensors (71A to 71D) each to receive a light beam reflected from an object within the range to be measured; and a distance-measurement control unit to calculate a distance to the object based on time of light emission of each of the phototransmitters and time of light reception of each of the photosensors. The photosensors (71A to 71D) outnumber the phototransmitters. A TOF photosensor unit (61) includes the TOF optical systems (71A, 71B, 71C, 71D) as multiple photosensors that receive light reflected from a full-spherical range to be measured so as to obtain three-dimensional point group data. The TOF optical system (71A) of the TOF photosensor unit (61) is in a first stage and the TOF optical systems (71B, 71C, and 71D) are in a second stage. The VCSEL optical systems (23F, 23B) and CMOS optical systems (31R, 31L) of a CMOS photosensor unit are in a third stage. The CMOS photosensor unit acquires a two-dimensional image. The VCSEL optical system (23B, 23F) serves as a fish-eye lens and emits emits light beam to a full-spherical range to be measured with the emitted light beams.

## Description

### BACKGROUND

### Technical Field

The present disclosure relates to a distance measurement apparatus and a distance measurement system.

### Related Art

As an example of ranging (or distance measurement), the time-of-flight (TOF) is known that includes emitting light for ranging toward an object and obtaining a time difference between the emitting time and the time of receiving light reflected from the object to calculate a distance to the object using the time difference. In the TOF, the image sensor for infrared light receives light for ranging reflected from an object after the light having an intensity modulated according to a predetermined irradiation pattern is emitted to the object. A time difference between the light emitting time and the light receiving time for the irradiation pattern is detected for each pixel to calculate a distance to the object. The calculated distance values are collected in a bitmap form for the respective pixels, which are stored as a distance image. Such a distance image generation apparatus (a distance measurement apparatus) is referred to as a TOF camera.

For example, Japanese Unexamined Patent Application Publication No. 2019-159284 discloses a distance measurement apparatus, which is an omnidirectional imaging device that acquires three-dimensional information in all directions at once using multiple sensors and cameras.

However, the technology of Japanese Unexamined Patent Application Publication No. 2019-159284 has room for improvement in distance measurement accuracy.

### SUMMARY

In view of the above, an object of the present disclosure is to achieve a higher distance measurement accuracy with a limited size of the apparatus.

An embodiment provides a distance measurement apparatus (100, 200) including: multiple phototransmitters (21F, 21B) configured to emit light beams to a range to be measured; multiple photosensors (71A to 71D) each configured to receive a light beam reflected from an object within the range to be measured; and a distance-measurement control unit (230) configured to calculate a distance to the object based on time of light emission of each of the phototransmitters (21F, 21B) and time of light reception of each of the photosensors (71A to 71D). The photosensors (71A to 71D) outnumber the phototransmitters (21F, 21B).

Another embodiment provides a distance measurement system including a projector including multiple phototransmitters (21F, 21B) configured to emit light beams to a range to be measured; a photosensor device including multiple photosensors (71A to 71D) each configured to receive a light beam reflected from an object within the range to be measured; and circuitry configured to calculate a distance to the object based on time of light emission of each of the phototransmitters (21F, 21B) and time of light reception of each of the photosensors (71A to 71D). The photosensors (71A to 71D) outnumber the phototransmitters (21F, 21B).

Embodiments of the present disclosure use photosensors more than phototransmitters to achieve higher intensities of light emitted from the phototransmitters, longer focal length of photosensors, and higher distance measurement accuracy within a limited size of the apparatus.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1A is an external perspective view of an image-capturing device according to a first embodiment;
FIG. 1B is a perspective view of the internal configuration of the image-capturing device in FIG. 1A;
FIG. 1C is an enlarged perspective view of the vicinity of a shutter button of the image-capturing device;
FIG. 2 is an illustration of the inner wall of the image-capturing device, according to an embodiment;
FIG. 3 is an illustration of a battery case of the image-capturing device, according to an embodiment;
FIG. 4 is a cross-sectional view of the shutter button in FIG. 1C;
FIG. 5 is another illustration of the vicinity of the shutter button;
FIG. 6 is another cross-sectional view of the vicinity of the shutter button;
FIG. 7A is a perspective view of a vertical-cavity surface-emitting lasers (VCSEL) projector unit;
FIG. 7B is a cross-sectional view of a VCSEL optical system;
FIG. 7C is an illustration of an arrangement example of the VCSEL projector units;
FIG. 8 is a cross-sectional view of a complementary metal oxide semiconductor (CMOS) photosensor unit;
FIG. 9A is an illustration of how two CMOS photosensor units are connected by a CMOS substrate;
FIG. 9B is an illustration of an arrangement of the CMOS substrate illustrating an arrangement of a CMOS substrate.
FIG. 10 is an illustration of an arrangement example of a CMOS photosensor unit and the VCSEL projector unit;
FIG. 11A is an external perspective view of a TOF photosensor unit;
FIG. 11B is a perspective view of the internal configuration of the TOF photosensor unit;
FIG. 11C is an illustration of a part of the internal configuration of the TOF photosensor unit;
FIG. 12A is an illustration of a relative position between TOF optical systems;
FIG. 12B is another illustration of a relative position between TOF optical systems;
FIG. 13 is a plan view of the VCSEL projector unit and the TOF photosensor unit;
FIG. 14 is an illustration of a relative position between VCSEL optical systems and the TOF optical systems, according to an embodiment of the present disclosure;
FIG. 15 is an illustration of a relative position between VCSEL optical systems and the TOF optical systems, according to a comparative example;
FIG. 16 is an illustration of an angle of view of the VCSEL optical system;
FIG. 17 is a block diagram of the hardware configuration of the image-capturing device, according to an embodiment;
FIG. 18 is a block diagram of the functional configuration of the image-capturing device;
FIG. 19 is an enlarged view of optical systems of an image-capturing device 200 according to a second embodiment;
FIG. 20 is an illustration of an angle of view of the VCSEL optical system; and
FIG. 21 is a block diagram of a hardware configuration of a distance measurement system according to an embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, embodiments of a distance measurement apparatus and a distance measurement system will be described in detail with reference to the accompanying drawings.

### First Embodiment

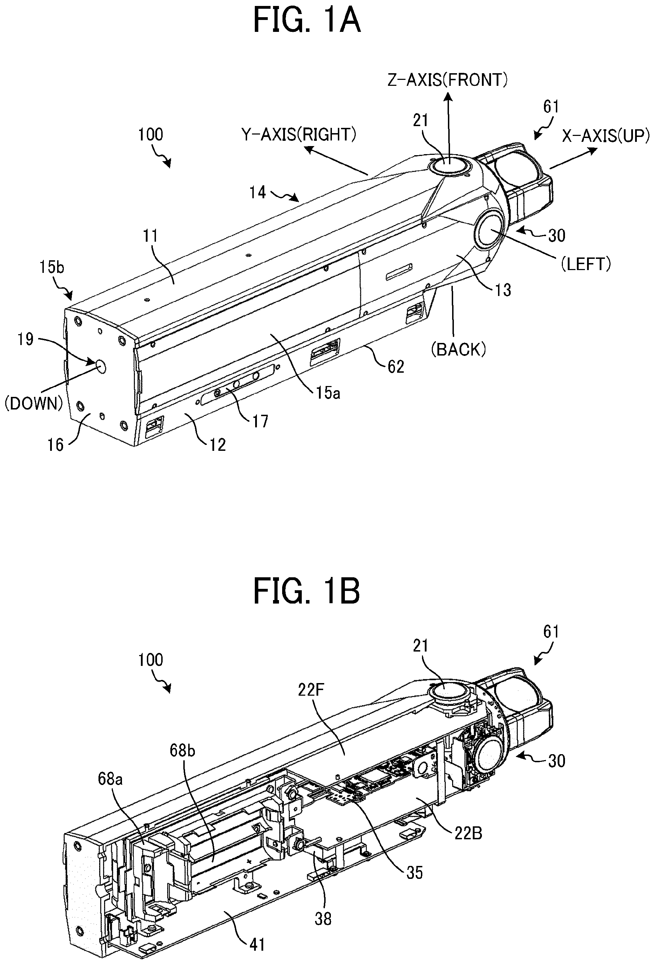

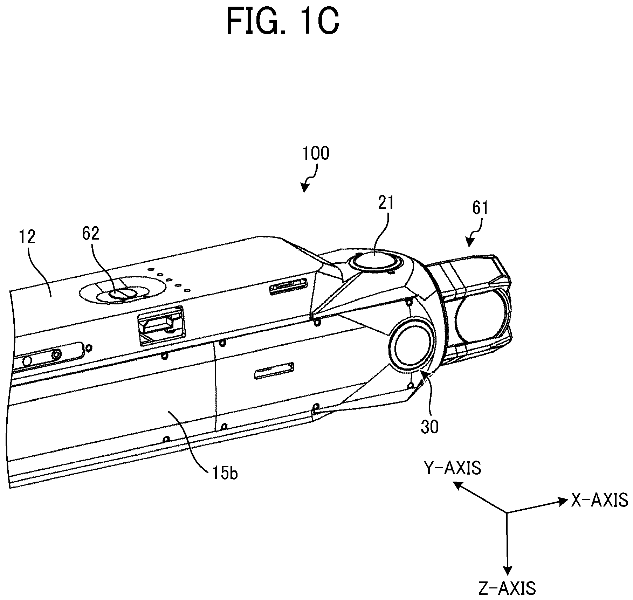

FIG. 1A is an external perspective view of the configuration of an image-capturing device 100 according to a first embodiment. FIG. 1B is a perspective view of the internal configuration of the image-capturing device 100. FIG. 1C is an enlarged perspective view of the vicinity of a shutter button 62 of the image-capturing device 100. The image-capturing device 100 serves as a TOF distance measurement apparatus.

As illustrated in FIGs. 1A to 1C, the image-capturing device 100 includes a VCSEL projector unit 21, a TOF photosensor unit 61, a CMOS photosensor unit 30, a substrate (a CMOS substrate 35, VCSEL substrates 22F, 22B, and a main substrate 41), and a fan 38.

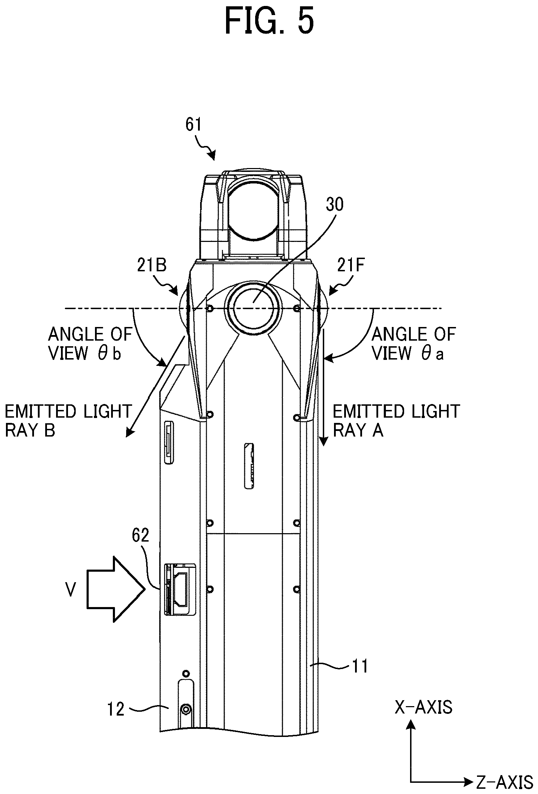

The VCSEL projector unit 21 emits distance-measuring light (e.g., infrared light) toward an object to be measured to obtain a distance to the object. The VCSEL projector unit 21 includes two VCSEL projector units 21: VCSEL projector units 21F and 21B) (refer to FIG. 5), which will be described later in detail.

The TOF photosensor unit 61 receives light scattered (scattering light) and reflected from the object to which the distance-measuring light has been emitted from the VCSEL projector unit 21, so as to obtain three-dimensional point group data.

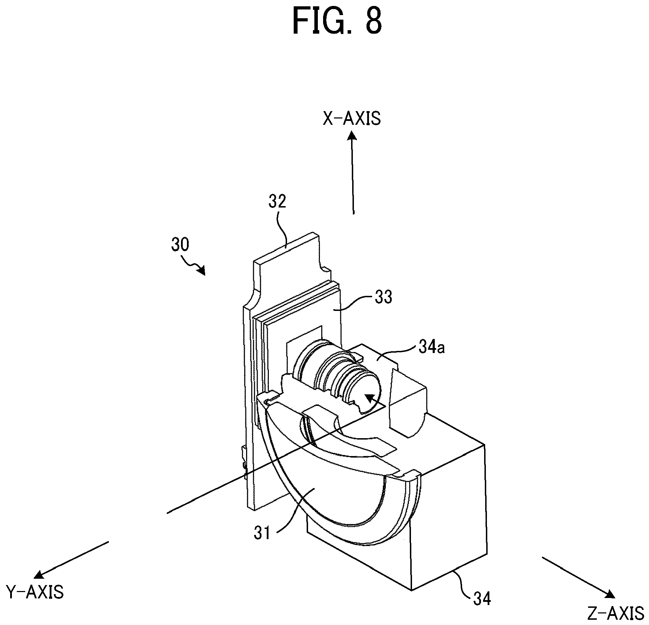

The CMOS photosensor unit 30 acquires a two-dimensional image using a CMOS sensor 33 (see FIG. 8).

The substrates (the CMOS substrate 35, the VCSEL substrates 22F and 22B, and the main substrate 41) are substrates for driving or controlling the VCSEL projector unit 21, the TOF photosensor unit 61, and the CMOS photosensor unit 30. The substrates (the CMOS substrate 35, the VCSEL substrates 22F and 22B, and the main substrate 41) are connected to each of the VCSEL projector unit 21, the TOF photosensor unit 61, and the CMOS photosensor unit 30 via cables, flexible printed circuits (FPCs), and flexible flat cables (FFCs).

The fan 38 is provided inside the image-capturing device 100 and generates forced convection to cool the inside of the image-capturing device 100.

The following describes the arrangement of multiple substrates (the CMOS substrate 35, the VCSEL substrates 22F and 22B, and the main substrate 41) included in the image-capturing device 100.

As illustrated in FIG. 1B, the CMOS substrate 35 is arranged between two VCSEL substrates 22F and 22B, which are aligned along the Z-axis. The main substrate 41 for controlling and driving the entire operations of the image-capturing device 100 is arranged in parallel with the three substrates. The main substrate 41 is disposed outside the VCSEL substrate 22B (i.e., on the -Z-side of the VCSEL substrate 22B, or closer to a rear cover 12 than the VCSEL substrate 22B.

This configuration allows a total of four substrates (the VCSEL substrates 22F and 22B, the CMOS substrate 35, and the main substrate 41) to be housed within the image-capturing device 100 without wasting space inside the image-capturing device 100. This further enables downsizing of the four substrates (the VCSEL substrates 22F and 22B, the CMOS substrate 35, and the main substrate 41) in the arrangement direction of the substrates (i.e., along the Z-axis). Further, the arrangement of the four substrates (i.e, the VCSEL substrates 22F and 22B, the CMOS substrate 35, and the main substrate 41 are arranged in parallel to each other) allows generation of air flows in the longitudinal direction of the substrates without hampering natural convective flows inside the image-capturing device 100 or forced convective flows by the fan 38, so as to reduce the occurrence of temperature deviations inside the image-capturing device 100. Further, since heat exhaust efficiency by inflow/outflow of air from a vent hole provided in a cover described later and heat radiation (heat transfer) from the cover to external air is improved, it is possible to reduce the occurrence of temperature rise inside the image-capturing device 100.

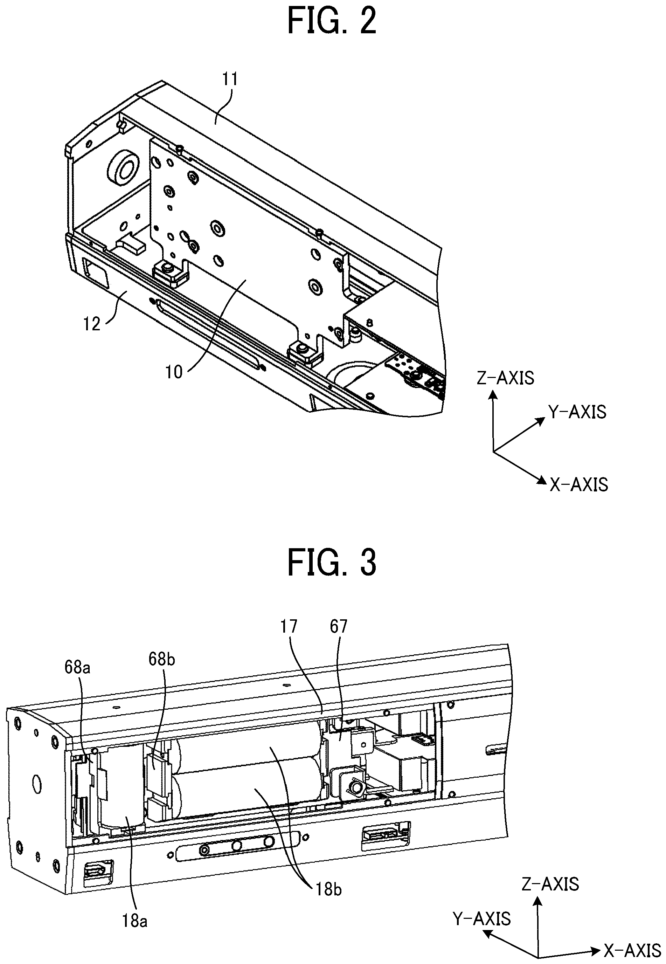

As illustrated in FIG. 1A to 1C, the image-capturing device 100 includes battery cases 68a and 68b for housing batteries 18a and 18b (see FIG. 3), the shutter button 62, and an operation switch unit 17.

The shutter button 62 allows a user operation to determine the image-capturing timing of the CMOS photosensor unit 30.

The operation switch unit 17 allows a user operation to switch between ON and OFF of the image-capturing device 100 and switch an operation mode.

Further, as illustrated in FIGs. 1A to 1C, the image-capturing device 100 includes covers (a front cover 11, a rear cover 12, a left cover 13, a right cover 14, battery covers 15a and 15b, a baseplate 16, and an inner wall 10 (see FIG. 2) for holding the above-described components.

As illustrated in FIG. 1A, the image-capturing device 100 includes a screw hole 19 at the baseplate 16 (i.e., the -X-side of the image-capturing device 100) used to fix the image-capturing device 100 to, for example, a tripod to prevent the occurrence of hand shake during the shooting (the image-capturing operation). The image-capturing device 100 fixed to a tripod via the screw hole 19 provides more stable images than the image-capturing device 100 held by a user does. The image-capturing device 100 fixed to a tripod more effectively works to provide more stable images when remotely operated.

The inner wall 10 that is a part of the covers of the image-capturing device 100 is described below. FIG. 2 is an illustration of the inner wall 10 of the image-capturing device 100.

As illustrated in FIG. 2, the inner wall 10 connects the front cover 11 and the rear cover 12. Although a monocoque structure provided with a single cover (an single exterior component) according to a comparative example more likely have a lower stiffness, the image-capturing device 100 according to the present embodiment is provided with the inner wall 10 connecting the front cover 11 and the rear cover 12 and has a higher stiffness.

Next, the battery cases 68a and 68b will be described. FIG. 3 is an illustration of battery cases 68a and 68b of the image-capturing device, according to an embodiment.

As illustrated in FIG. 3, the image-capturing device 100 includes built-in batteries 18a and 18b. With such an arrangement, the image-capturing device 100 allows a reduction in the burden of carrying and shooting work. The image-capturing device 100 includes a battery circuit board 67 provided with battery cases 68a and 68b, which is fixed to each side (i.e., each of the +Y side and the -Y side) of the inner wall 10. The battery cases 68a and 68b house the batteries 18a and 18b, respectively.

Such a configuration facilitates replacement of the batteries 18a and 18b because in the image-capturing device 100, the batteries 18a and the 18b are attachable and detachable along the Y-axis by removing the battery covers 15a and 15b in FIG. 1A.

The image-capturing device 100 may be driven by using a power cord. The power cord is preferably detachably attachable. Such a configuration eliminates the need for built-in batteries in the body of the image-capturing device 100 and thus achieves a reduction in the weight of the image-capturing device 100 while preventing longer image-capturing time.

In such a configuration using a power code to drive the image-capturing device 100, an insertion port of the power cord is preferably disposed at a lower portion closer to the baseplate 16 than the shutter button 62 (downstream of the shutter button 62 in the -X-direction). This arrangement allows light beams from being blocked by the fingers of the user pressing the shutter button 62 earlier than by the power code, and thus reduces the dead spot due to the power code more than the dead spot due to the fingers of the user.

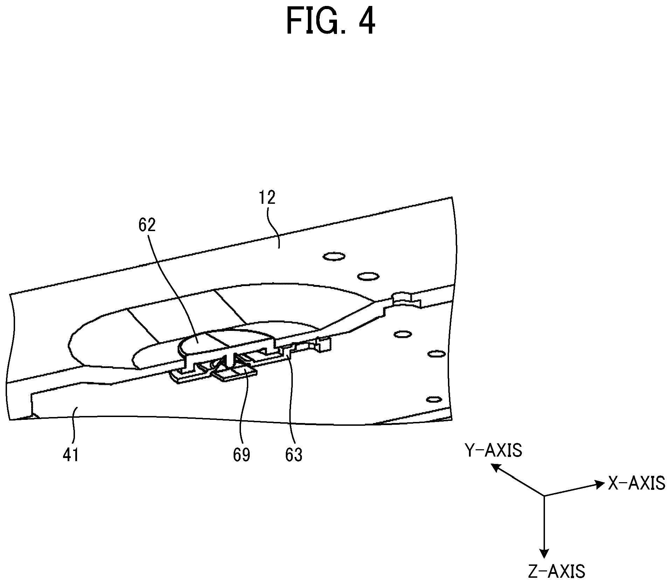

The following describes the shutter button 62. FIG. 4 is a cross-sectional view of the shutter button 62.

As illustrated in FIG. 4, the image-capturing device 100 includes a switch 69 on the -Z-side of the main substrate 41. Further, the image-capturing device 100 includes the shutter button 62 on the rear cover 12, coaxially with the switch 69. This arrangement allows the direct pressing of the switch 69 using the shutter button 62 and thus achieves a reduction in the number of components and simplification of the structure. Further, directly pressing the switch 69 using the shutter button 62 further ensures a reliable reaction of the switch 69. In some embodiments in which the shutter button 62 and the switch 69 are separated from each other, the shutter button 62 and the switch 69 may be connected to each other via an intermediate member.

As illustrated in FIG. 4, the image-capturing device 100 includes a spring 63 between the main substrate 41 and the shutter button 62. The spring 63 serves to push back the shutter button 62 to a predetermined position when the user pushes and releases the shutter button 62.

Next, the arrangement of the shutter button 62 will be described. FIG. 5 is an illustration of the vicinity of the shutter button 62.

As illustrated in FIG. 5, the image-capturing device 100 includes a shutter button 62 in a region where a blind spot is generated by various covers (in the present embodiment, the rear cover 12).

Specifically, in the X-Z cross-sectional plane in FIG. 5, the angle of view (the lower side, or -X side) of the extreme periphery of the light beams emitted from the VCSEL projector unit 21F is θa. The angle of view θa is variable up to approximately 90 degrees. The light beams emitted from the VCSEL projector unit 21B present a shape in which a part of the rear cover 12 housing the main substrate 41 protrudes in the -Z-direction. With such a shape, the angle of view θb of the extreme periphery of the light beams emitted from the VCSEL projector unit 21 is greater than θb and less than θa (θb < θa). This configuration prevents the extreme peripheral rays having the angle of view θb (i.e., light rays B emitted from the VCSEL projector unit 21B) from being at least partly blocked by the finger of the user when the shutter button 62 is in the vicinity of a place at the rear cover 12, indicated by arrow V as illustrated in FIG. 5. However, when the shutter button 62 is disposed on the opposite side (on the front cover 11), the rays having the angle of view θa (approximately 90 degrees) (i.e., light rays A emitted from the VCSEL projector unit 21F) is blocked by the finger of the user. This causes a reduction in the angle of view of the rays.

The shutter button 62 is disposed between the TOF photosensor unit 61 and the batteries 18a and 18b. Such an arrangement of the shutter button 62 between the TOF photosensor unit 61 and the batteries 18a and 18b induces the user to hold the portion (a portion near the center of gravity) in which the batteries 18a and 18b are housed, and prevent camera shake while allowing a reduction in the user's fatigue.

Instead of determining the shooting timing by pressing and releasing the shutter button 62 on the rear cover 12 of the image-capturing device 100, a remote operation may be performed in a wired or wireless manner. Such a remotely operable configuration prevents shake of the image-capturing device 100 held by the hand of the user more effectively.

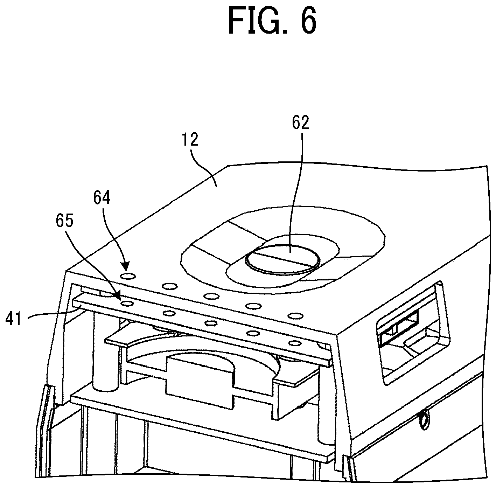

FIG. 6 is a cross-sectional view of the vicinity of the shutter button 62. As illustrated in FIG. 6, the image-capturing device 100 includes multiple LED elements 65 (five LED elements in FIG. 6) on the -Z-side of the main substrate 41, so as to allow the LED elements 65 to indicate the operation state of the image-capturing device 100. Further, the image-capturing device 100 includes openings 64 coaxial with the optical axes of the LED elements 65, respectively, on the rear cover 12. Such a configuration allows the image-capturing device 100 to emit the light beams emitted from the LED element 65 to the outside through the openings 64.

In the image-capturing device 100, the LED element 65 and the opening 64 may be connected by, for example, a light guide plate or an optical fiber. This arrangement increases the utilization efficiency of light in the image-capturing device 100. In some embodiments, the image-capturing device 100 includes a lens system and a diffusion plate in the opening 64 to increase the viewability of images formed by light emitted from the LED element 65.

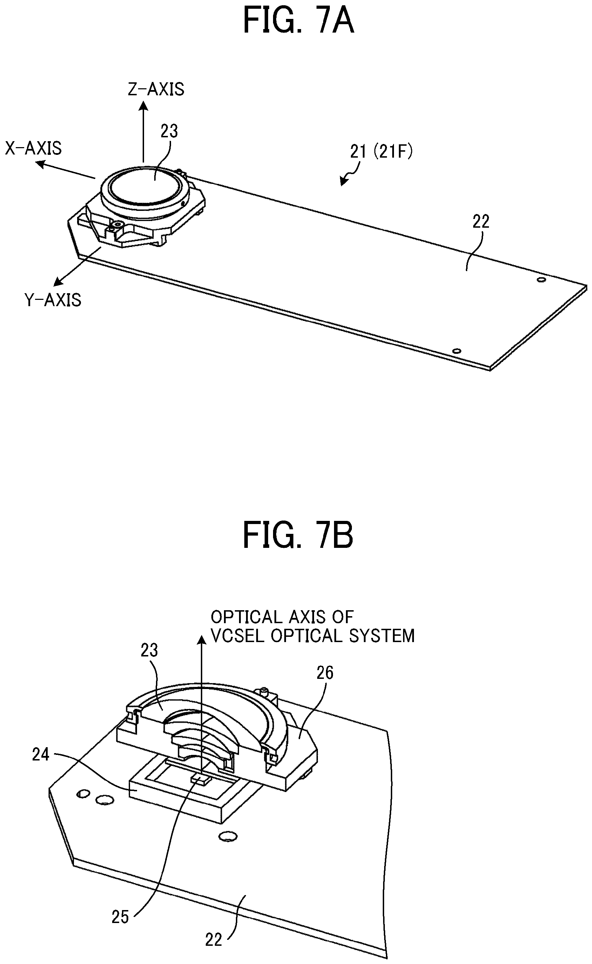

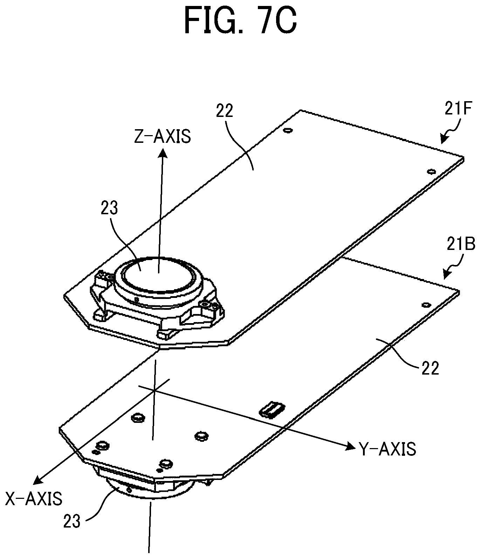

Next, the VCSEL projector unit 21 will be described. FIG. 7A is a perspective view of a VCSEL projector unit 21. FIG. 7B is a cross-sectional view of a VCSEL optical system 23. FIG. 7C is an illustration of an arrangement example of the VCSEL projector unit 21.

As illustrated in FIGs. 7A to 7C, the VCSEL projector unit 21 includes a VCSEL substrate 22, a VCSEL package 24, and a lens cell 26.

The VCSEL package 24 is a light source including a VCSEL as a light emitting point 25 (a light source). The lens cell 26 houses the VCSEL optical system 23 composed of multiple lenses.

The VCSEL package 24 is soldered to each of the VCSEL substrates 22 (VCSEL substrates 22F and 22B). In the following detailed description of the VCSEL substrates 22F and 22B, the VCSEL substrates 22F and 22B are collectively referred to as a VCSEL substrate 22. Further, the VCSEL optical system 23 (i.e., the lens cell 26) is fixed to the VCSEL substrate 22 using a screw or bonded to the VCSEL substrate 22 so as to be aligned with the light emitting point 25 with a predetermined accuracy.

The VCSEL substrate 22 (the VCSEL substrates 22F and 22B) is mounted with a drive circuit for driving the VCSEL package 24. The drive circuit of the VCSEL substrate 22 generates heat because a large current flows in order to increase the intensity of light emitted from the VCSEL package 24 serving as a light source. To handle such generated heat, the VCSEL substrate 22 is mounted with a drive circuit having a large allowable current in order to reduce heat generation of the drive circuit, and is also mounted with a dissipator such as a heatsink. To mount such components on the VCSEL substrate 22, the VCSEL substrate 22 is larger than the other substrates, including the CMOS substrate 35. Such a configuration prevents the VCSEL substrate 22 from excessively heating up, and thus allows the VCSEL projector unit 21 to emit a higher intensity laser beam in the image-capturing device 100.

As illustrated in FIG. 7C, the VCSEL projector unit 21 (i.e., the VCSEL projector units 21F and 21B) are arranged along the Z-axis to which the optical axes of the VCSEL optical systems 23 are parallel (or the optical axes of the VCSEL optical systems 23 of the VCSEL projector units 21F and 21B and the Z-axis are coincident with each other). The VCSEL projector units 21F and 21B face in opposite directions.

The VCSEL optical system 23 serves as a fish-eye lens. The VCSEL optical systems 23 of the multiple phototransmitters 21 (i.e., the VCSEL projector units 21F and 21B) emit light beams to a full-spherical (4π steradians) range to be measured with the emitted light beams (the light beams from the VCSEL projector units 21F and 21B) in a situation where the emitted light beams are not blocked by any of the surrounding components.

The range to be measured refers to a range actually irradiated with light beams emitted from the multiple phototransmitters: two VCSEL projector units 21F and 21B, within the full-spherical range of 4π steradians with the image-capturing device 100 as the center. As described above, the range to be measured is equal to the full-spherical range of 4π steradians measurement target range corresponds to the entire celestial sphere (full-spherical) (4π steradians) in a situation where the light beams emitted from the VCSEL projector units 21F and 21B are not blocked by any of the components surrounding the VCSEL projector units 21F and 21B. When the emitted light beams are partially blocked by any of the components surrounding the VCSEL projector units 21F and 21B, the range to be measured is a range, within the full-spherical range, actually irradiated with light rays that have not been blocked by any of the components surrounding the phototransmitters 21.

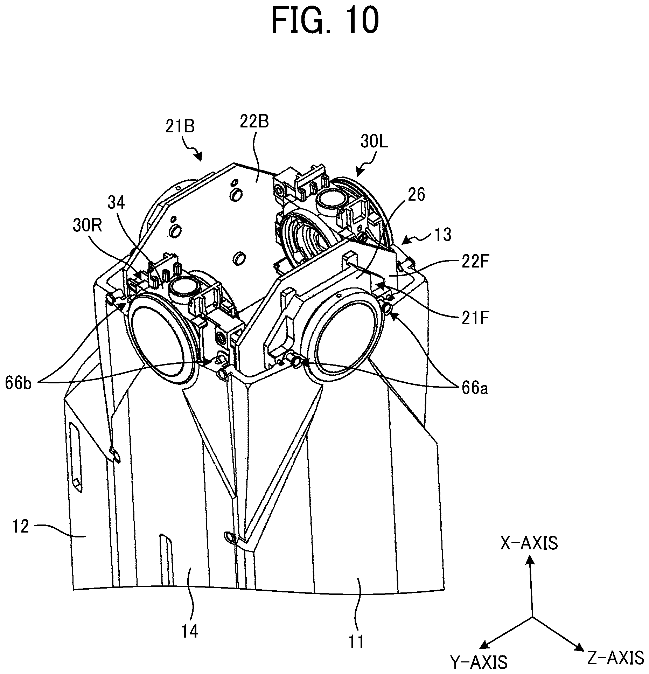

In the image-capturing device 100, the VCSEL projector units 21F and 21B are fixed by fastening screws 66a (see FIG. 10) to the front cover 11 and the rear cover 12, respectively. In this case, positioning parts in the lens cells 26 of the VCSEL projector units 21F and 21B are positioned corresponding to positioning parts in the front cover 11 and the rear cover 12, respectively. This arrangement allows maintaining the accuracy of adjustment of the relative position (i.e., positioning) between the VCSEL projector unit 21F and the front cover 11 and the accuracy of adjustment of the relative position (i.e., positioning) between the VCSEL projector unit 21B and the rear cover 12.

This configuration reduces or eliminates variations in the amount of light blocked by, for example, the front cover 11 and the rear cover 12 after emitted from the VCSEL projector units 21F and 21B, due to processing errors (dimension errors and shape errors) and also due to assembly variations of components of the image-capturing device 100. This reduction or elimination of variations in the amount of light blocked by any component further prevents poor illumination distribution of light emitted from the image-capturing device 100.

The VCSEL substrates 22F and 22B are arranged in parallel to each other as illustrated in FIG. 10 described later. The VCSEL substrates 22F and 22B are to be larger in order to reduce overheating due to the emission of high intensity light from the VCSEL projector units 21F and 21B. However, the arrangement of the VCSEL substrates 22F and 22B of a large size in parallel allows downsizing of the image-capturing device 100 without interference between the VCSEL substrates 22F and 22B. Further, since the number of the VCSEL substrates 22F and 22B is minimum sufficient to project light to the full-spherical range to be measured, the downsizing of the image-capturing device 100 is achieved.

Next, the CMOS photosensor unit 30 will be described. FIG. 8 is a cross-sectional view of the CMOS photosensor unit 30.

As illustrated in FIG. 8, the CMOS photosensor unit 30 includes a CMOS optical system 31, a CMOS sensor substrate 32, and a lens holder 34.

The CMOS optical system 31 includes multiple lenses, and a prism. The CMOS sensor 33 is mounted on the CMOS sensor substrate 32. The CMOS optical system 31 and the CMOS sensor substrate 32 are integrally held by the lens holder 34. The CMOS sensor substrate 32 is, for example, bonded to the holder 34a of the lens holder 34.

In the image-capturing device 100, scattering light reflected from an external object, which has been emitted from an external illumination or the VCSEL projector unit 21, enters the CMOS optical system 31 and reaches the CMOS sensor 33 as indicated by arrow S in FIG. 8. When the external illumination is a white light source, the CMOS sensor 33 captures a luminance image or a red, green, and blue (RGB) image corresponding to the intensity of the scattering light reflected from the external object. Further, when light scattered and reflected from the object after the VCSEL projector unit 21 emits light to the object enters the CMOS optical system 31, the CMOS sensor 33 captures a luminance image with the wavelength of the light emitted from the VCSEL projector unit 21.

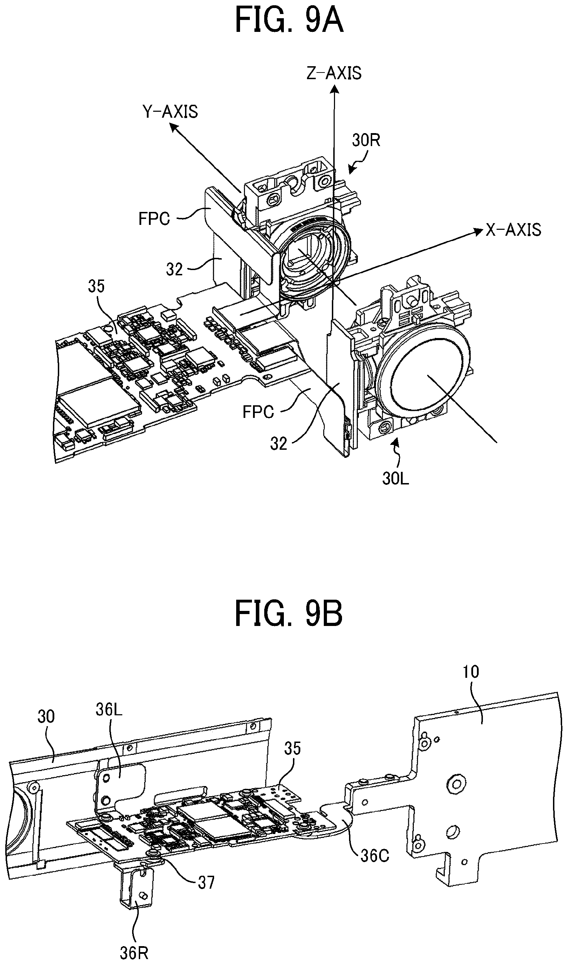

FIG. 9A is an illustration of a CMOS substrate 35 connecting two CMOS photosensor units 30. FIG. 9B is an illustration of the arrangement of the CMOS substrate 35.

As illustrated in FIG. 9A, the image-capturing device 100 is arranged with the optical axis of the CMOS optical systems 31 coincident with the Y-axis. In the image-capturing device 100, two CMOS optical systems 31 as multiple imagers are disposed facing in the opposite directions (i.e., CMOS photosensor units 30R and 30L are disposed facing in the opposite directions). In the image-capturing device 100, the CMOS sensor substrates 32 of the CMOS photosensor units 30R and 30L are connected to the common (one) CMOS substrate 35 by a cable such as a flexible printed circuit (FPC).

As illustrated in FIG. 9B, in the image-capturing device 100, the CMOS substrate 35 is screwed via a spacer 37 onto a bracket 36L screwed to the left cover 13, a bracket 36R screwed to the right cover 14, and a bracket 36C screwed to the inner wall 10.

The CMOS optical system 31 serves as a fish-eye lens. The CMOS optical systems 31 of the CMOS photosensor units 30R and 30L receive light beams scattered and reflected from the full-spherical range of 4π steradians in a situation where light beams emitted from multiple photoemitters are not blocked by any of the surrounding components.

Next, the arrangement of the CMOS photosensor unit 30 will be described. FIG. 10 is an illustration of an arrangement example of a CMOS photosensor unit 30 and the VCSEL projector unit 21.

In the image-capturing device 100 as illustrated in FIGs. 1B and 10, a part (or the entirety) of the CMOS photosensor unit 30 (or the lens holder 34) is disposed between two VCSEL substrates 22F and 22B. This arrangement allows downsizing of the image-capturing device 100 along the optical axis of the CMOS optical system 31 (i.e, the Y-axis).

In the image-capturing device 100 as illustrated in FIG. 10, the CMOS photosensor units 30R and 30L are fixed to the right cover 14 and the left cover 13, using screws 66b, respectively. In this case, positioning parts in the lens cells 34 of the CMOS photosensor units 30R and 30L are positioned corresponding to positioning parts in the right cover 14 and the left cover 13, respectively. This arrangement allows maintaining the accuracy of adjustment of the relative position (i.e., positioning) between the CMOS photosensor unit 30R and the right cover 14 and the accuracy of adjustment of the relative position (i.e., positioning) between the CMOS photosensor unit 30L and the left cover 13.

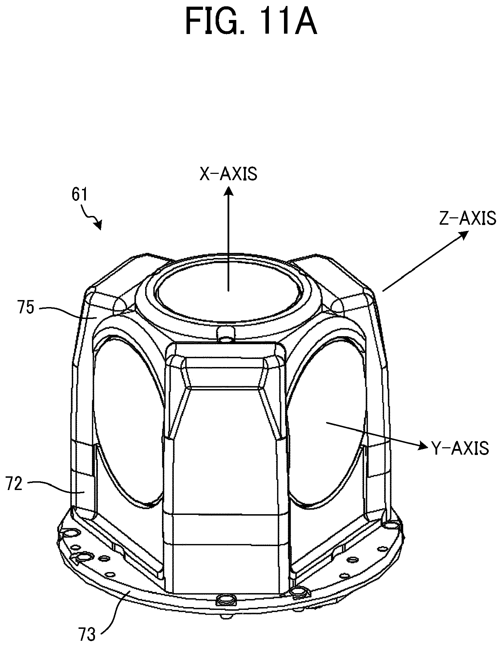

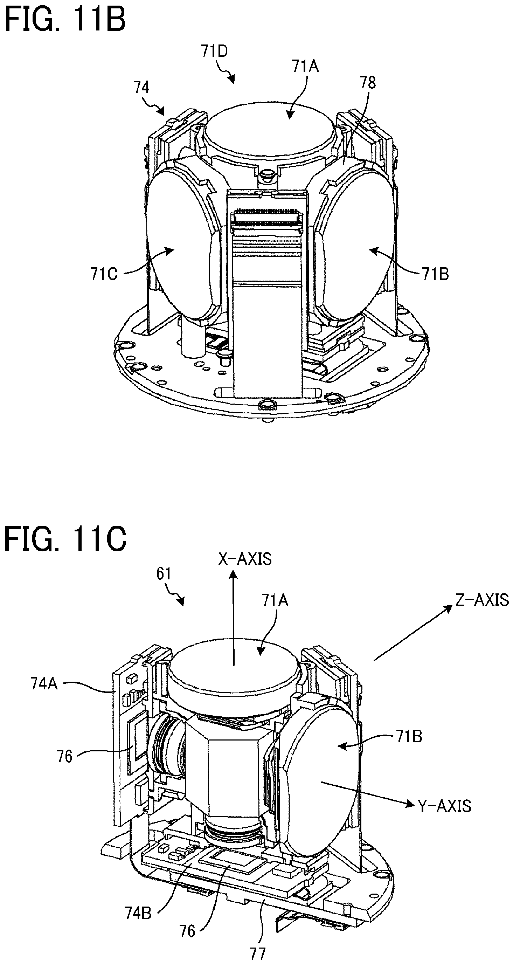

Next, the TOF photosensor unit 61 will be described. FIG. 11A is a perspective view of the external appearance of a TOF photosensor unit 61. FIG. 11B is a perspective view of the internal structure of the TOF photosensor unit 61. FIG. 11C is an illustration of the internal structure of the TOF photosensor unit 61, a part of which is cut away.

As illustrated in FIGs. 11A to 11C, the TOF photosensor unit 61 has a four-eye configuration. The TOF photosensor unit 61 includes TOF optical systems 71 (71A, 71B, 71C, 71D) as multiple photosensors that receive light reflected from a full-spherical range to be measured; TOF sensor substrates 74, a relay board 77, and a holder 78.

Each TOF sensor substrate 74 is mounted with a TOF sensor 76.

The relay board 77 serves as a relay between the TOF sensor substrates 74 and the main substrate 41.

The TOF optical systems 71A, 71B, 71C, 71D and the TOF sensor substrates 74 are integrally held by the holder 78.

Notably, the TOF sensor substrate 74 and the relay board 77 are connected by a cable such as an FPC, and the relay board 77 and the main substrate 41 are also connected by a cable such as an FPC.

In the image-capturing device 100 as illustrated in FIGs. 11A to 11C, the TOF photosensor unit 61 having an integral structure enables simplification of an assembly/adjustment facility in a factory, reduction in an assembly/adjustment time, and quality assurance in the integral structure. In addition, since the TOF photosensor unit 61 has an integrated structure, the image-capturing device 100 can be mounted on not only one model but also multiple models, and thus cost reduction can be achieved.

In the image-capturing device 100, light scattered and reflected from an external object after emitted from the VCSEL projector unit 21 to the external object reaches the TOF sensor 76 mounted on the TOF sensor substrate 74 through the TOF optical system 71.

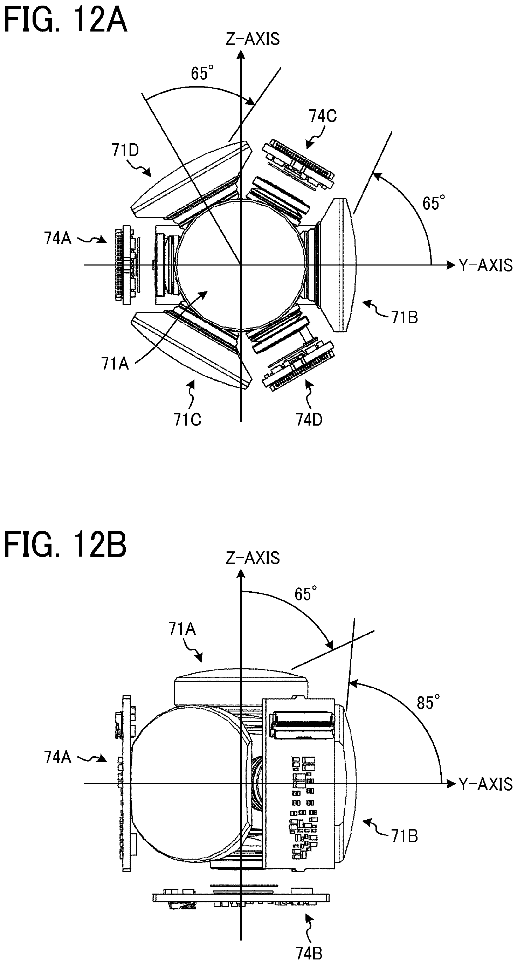

FIGs. 12A and 12B are illustrations of the relative position between the TOF optical systems 71A, 71B, 71C, and 71D.

As illustrated in FIGs. 12A and 12B, the optical axis of the TOF optical system 71A is along the +X-direction (i.e., the TOF optical system 71B is disposed with its incidence plane facing in the +X-direction (upward in FIG. 12B). The optical axes of the TOF optical systems 71B, 71C, and 71D are along the horizontal direction. The optical axis of the TOF optical system 71B is along the Y-axis (i.e., the TOF optical system 71B is disposed with its incidence plane facing the right (i.e., in the +Y-direction) in FIGs. 12A and 12B. In other words, at least one photosensor (71A) of the photosensors (71A to 71D) has an optical axis perpendicular to an optical axis of each of at least two photosensors (71B, 71C) of the photosensors (71A to 71D) excluding the at least one photosensor (71A). Each of the TOF optical systems 71C and 71D is arranged at an angle rotated by 120 degrees around the X-axis with respect to the TOF optical system 71B.

The TOF optical system 71A vertically arranged has an angle of view (in the vertical direction; in an X-Y cross-sectional plane and an X-Z cross-sectional plane) of 65 degrees. The TOF optical system 71B horizontally arranged (with its incidence plane facing the right in FIGs. 12A and 12B) has an angle of view of 85 degrees in the vertical direction (i.e., in the X-Y cross-sectional plane) and an angle of view of 65 degrees in the horizontal direction (in the Y-Z cross sectional plane). The same as described above for the TOF optical system 71B applies to the TOF optical systems 71C and 71D. Such an arrangement allows the TOF photosensor unit 61 of four-eye configuration in the image-capturing device 100 to receive light beams scattered and reflected from objects in all directions except for an area with an angle of view of 85 degrees or greater on the lower side of the Y-Z cross-sectional plane.

The TOF optical system 71 (the TOF optical systems 71A, 71B, 71C, and 71D) has an angle of view smaller than the angle of view of the VCSEL optical system 23 (i.e., each of the photosensors has an angle of view smaller than a light-emitting range of each of the phototransmitters). With such a smaller angle of view, the TOF optical system 71 has a focal length longer than the focal length of the VCSEL optical system 23. Such a TOF optical system 71 receives a larger amount of light per unit angle of view, which is related to the amount of light per unit pixel received by the TOF sensor 76. This configuration allows an increase in the amount of light received by the TOF optical system 71, which has even been reflected from a distant object or a low-reflective object.

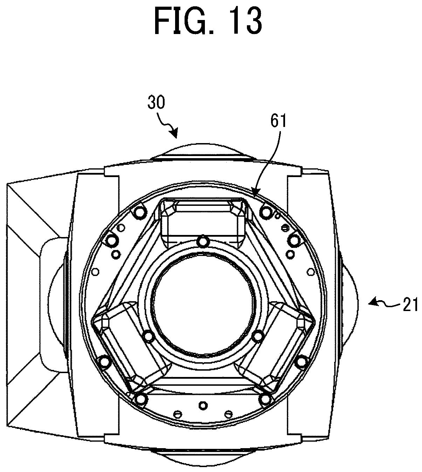

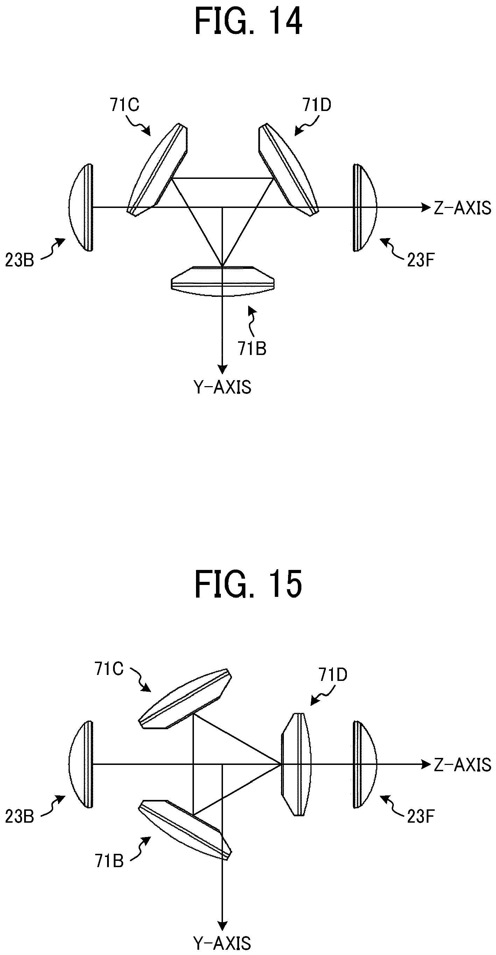

Next, the relative position between the VCSEL projector unit 21 and the TOF photosensor unit 61 is described. FIG. 13 is a plan view of the VCSEL projector unit 21 and the TOF photosensor unit 61. FIG. 14 is an illustration of a relative position between the VCSEL optical system 23 and the TOF optical system 71, according to an embodiment of the present disclosure. FIG. 15 is an illustration of a relative position between a VCSEL optical system 23 and a TOF optical system 71, according to a comparative example. More specifically, FIG. 14 is an illustration of only the outermost lenses in the VCSEL projector unit 21 and the TOF photosensor unit 61, the lenses extracted from the plan view of the configuration of the image-capturing device 100 according to an embodiment in FIG. 13. FIG. 15 indicates the configuration of the comparative example.

In FIG. 15 according to the comparative example, the TOF optical systems 71B, 71C, and 71D are rotated about the X-axis by 30 degrees from the formation of the TOF optical systems 71B, 71C, and 71D in FIG. 14. In FIG. 15, the VCSEL optical system 23F and the TOF optical system 71D are oriented in the same direction (+Z-direction). The image-capturing device of the arrangement in FIG. 15 causes the TOF optical system 71D to receive most of the light rays reflected from an object, which have been emitted to the object from the VCSEL optical system 23F on the +Z-side of the TOF optical system 71D.

Further, in the image-capturing device according to the comparative example in FIG. 15, the TOF optical system 71B receives half of the amount of light scattered and reflected from an object after emitted from the VCSEL optical system 23B on the -Z-side of the TOF optical system 71D to the object, and the TOF optical system 71C receives the remainder of the amount of the light. The configuration in FIG. 15 more likely causes large deviations in the amounts of light received by the three TOF photosensor units 71B, 71C, and 71D (the ratio of the amount of light between 71B, 71C, and 71D is approximately 0.5 : 0.5 : 1 (71B : 71C : 71D = 0.5 : 0.5 : 1)), thus more likely causing a deterioration in detection accuracy.

In the image-capturing device 100 as illustrated in FIG. 14, however, the VCSEL optical systems 23F and 23B are disposed symmetrically with respect to the X-Y plane. Further, the TOF optical systems 71B, 71C, and 71D are disposed symmetrically with respect to the X-Y plane. In other words, the phototransmitters (the VCSEL optical systems 23F and 23B of the VCSEL projector units 21F and 21B) each have an optical axis perpendicular to the optical axis of at least one photosensor (the TOF photosensor unit 71B) of the photosensors (the TOF photosensor units 71B, 71C, and 71D). Unlike the comparative example in FIG. 15, the configuration in FIG. 14 according to the present embodiment allows a reduction in the deviation of the amounts of light received by the three TOF optical systems 71B, 71C, and 71D (the deviation between the three TOF optical systems). The image-capturing device 100 of the configuration in FIG. 14 achieves a much higher detection accuracy.

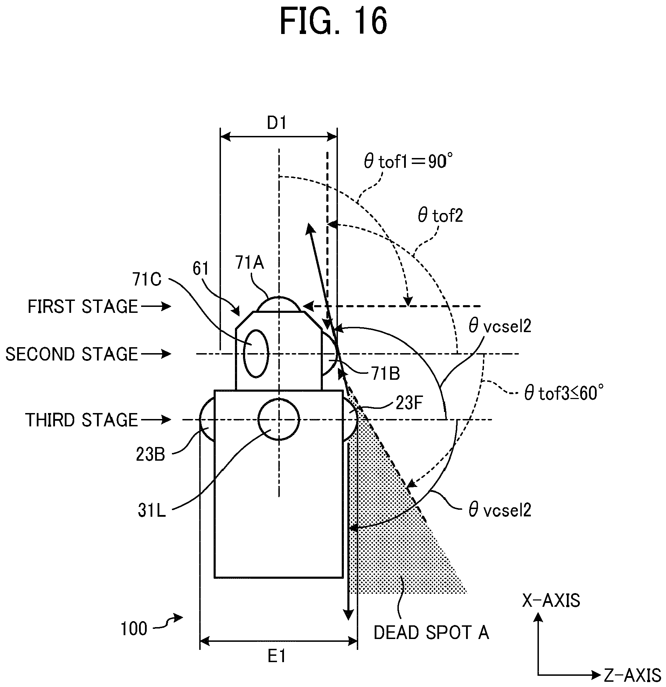

Next, the angle of view of the VCSEL optical system 23 will be described. FIG. 16 is an illustration of an angle of view of the VCSEL optical system 23.

The image-capturing device 100 as illustrated in FIG. 16 includes the TOF optical system 71A of the TOF photosensor unit 61 in the first stage counted from the top (+X-side edge) and the TOF optical systems 71B, 71C, and 71D in the second stage. The image-capturing device 100 further includes the VCSEL optical systems 23F and 23B and the CMOS optical systems 31R and 31L in the third stage. In this case, the imagers (the CMOS optical systems 31R, 31L) each have an optical axis perpendicular to the optical axis of the at least one photosensor (the TOF optical system 71A) as illustrated in FIG. 16.

FIG. 16 schematically illustrates angles of view of the extreme peripheral light rays in a vertical cross section (Z-X cross-sectional plane) of the VCSEL optical system 23F and the TOF optical systems 71A and 71B. In FIG. 16, in order to avoid complicating the description, the TOF optical systems 71B, 71C, and 71D are rotated about the X-axis so that the optical axis of the TOF optical system 71B is parallel to the Z-axis. In the following description, the TOF optical systems 71A to 71D and 171A to 171D are designed to have a wider angle of view (a maximum angle of view of 90 degrees) than the optical system illustrated in FIG. 12B.

As illustrated in FIG. 16, in the image-capturing device 100, since the VCSEL optical system 23F on the +Z-side of the image-capturing device 100 covers an extreme peripheral angle of view θvcsel2 of greater than 90 degrees (θvcsel2 > 90 degrees) in the upper light-emitting range, the VCSEL projector unit 21 (a combination of the VCSEL optical system 23F and the VCSEL optical system 23B on the backside of the VCSEL optical system 23F (i.e., on the -Z-side of the image-capturing device 100)) covers a light-emitting range of a hemisphere (2π steradians).

The upper light-receivable range of the TOF photosensor unit 61 covers a hemispherical range: the light-receivable range of the TOF optical system 71A on the top of the TOF photosensor unit 61; and the light-receivable ranges (an angle of view θtof2) of the horizontally-arranged TOF optical systems 71B, 71C, and 71D. Thus, the image-capturing device 100 is capable of capturing an image of the entire image-capturing range of the upper hemisphere. The image-capturing range of the CMOS photosensor unit 30 refers to an overlapping area between the light-emitting range of the VCSEL projector unit 21 and the light-receivable range of the CMOS photosensor unit 30.

Next, a hardware configuration of the image-capturing device 100 will be described. The following describes the hardware configuration for measuring a distance between the image-capturing device 100 and the object.

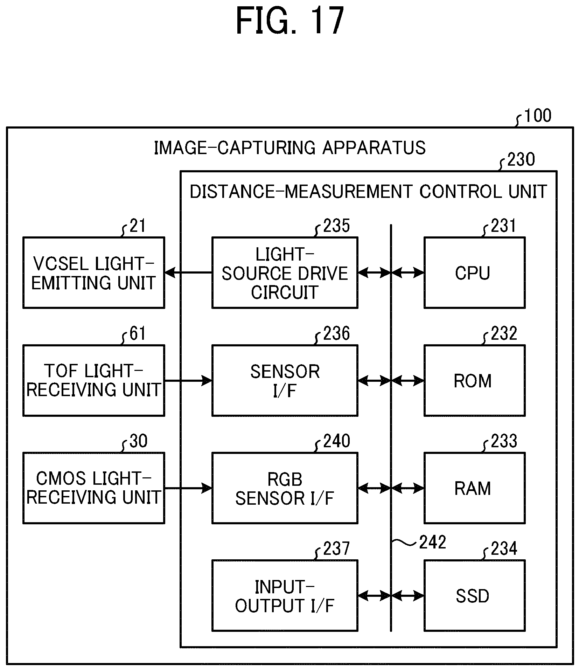

FIG. 17 is a block diagram of the hardware configuration of the image-capturing device 100, according to an embodiment. In FIG. 17, the image-capturing device 100 includes a distance-measurement control unit 230 in addition to the VCSEL projector unit 21, the TOF photosensor unit 61, and the CMOS photosensor unit 30.

The distance-measurement control unit 230, which is built in the cover, is connected to the VCSEL projector unit 21, the TOF photosensor unit 61, and the CMOS photosensor unit 30. The distance-measurement control unit 230 includes a central processing unit (CPU) 231, a read only memory (ROM) 232, a random access memory (RAM) 233, a solid state drive (SDD) 234, a light-source drive circuit 235, a sensor interface (I/F) 236, an input-output I/F 237, and an RGB sensor I/F 240. These components are electrically connected to each other via a system bus 242.

The CPU 231 loads into the RAM 233 a program and data from a storage device, such as the ROM 232 or the SSD 234, and executes processing to provide the control or functions (described later) of the entirety of the distance-measurement control unit 230. Some or the entirety of these functions of the CPU 231 may be implemented by electronic circuit such as an application specific integrated circuit (ASIC) and a field-programmable gate array (FPGA).

The ROM 232 is a non-volatile semiconductor memory (storage device) that holds a program and data although the power is turned off. The ROM 232 stores programs and data of, for example, a basic input/output system (BIOS) and an operating system (OS) that are executed when the image-capturing device 100 is activated.

The RAM 233 is a volatile semiconductor memory (storage device) that temporarily holds a program and data.

The SSD 234 is a nonvolatile memory that stores programs for executing processing by the distance-measurement control unit 230 and various types of information. Note that the SSD may be a hard disk drive (HDD).

The light-source drive circuit 235 is an electric circuit that is electrically connected to the VCSEL projector unit 21 and outputs, to the VCSEL projector unit 21, a drive signal such as a drive voltage in response to a control signal input from the CPU 231. More specifically, in response to the control signal from the CPU 231, the light-source drive circuit 235 drives multiple light emitters included in the VCSEL projector unit 21 to emit light. The drive signal may use a rectangular wave, a sine wave, or a voltage waveform having a predetermined waveform. The light-source drive circuit 235 changes the frequency of the voltage waveform to modulate the frequency of the drive signal.

The sensor I/F 236 is an interface that is electrically connected to the TOF photosensor unit 61 and receives a phase signal output from the TOF photosensor unit 61. The input-output I/F 237 is an interface for connecting with an external device such as a personal computer (PC).

The RGB sensor I/F 240 is an interface that is electrically connected to the CMOS photosensor unit 30 and receives an RGB signal output from the CMOS photosensor unit 30.

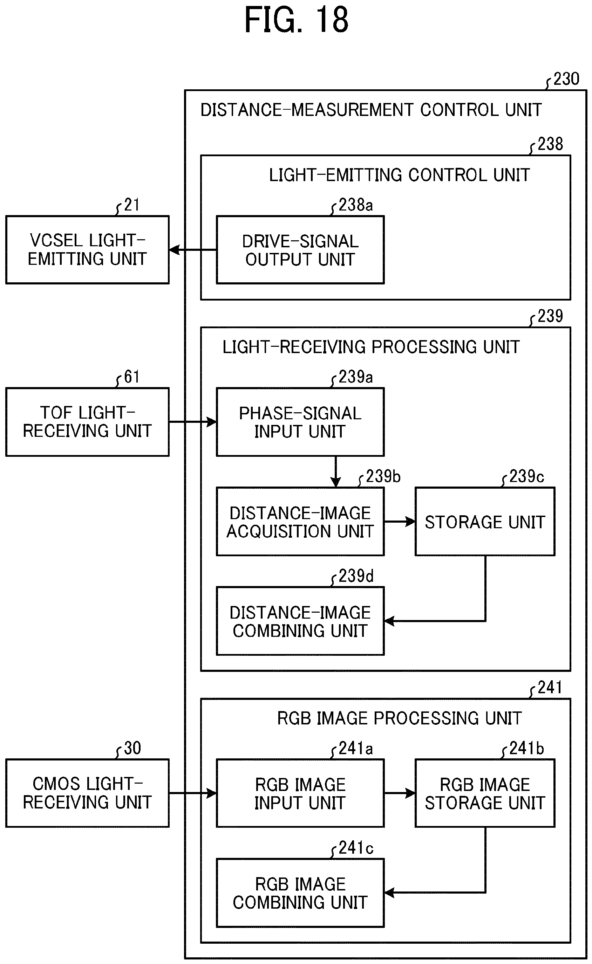

FIG. 18 is a block diagram of a functional configuration of the image-capturing device 100. In FIG. 18, the functional configuration of the image-capturing device 100 includes a distance-measurement control unit 230.

The distance-measurement control unit 230 includes a light-emitting control unit 238, a light-receiving processing unit 239, and an RGB image processing unit 241. The distance-measurement control unit 230 controls the light emission of the VCSEL projector unit 21 via the light-emitting control unit 238, the light reception of the TOF photosensor unit 61 via the light-receiving processing unit 239, and the light reception of the CMOS photosensor unit 30 via the RGB image processing unit 241 in a synchronous manner.

The light-emitting control unit 238 includes at least a drive-signal output unit 238a that implements a function of the image-capturing device 100.

The drive-signal output unit 238a outputs a drive signal to the VCSEL projector units 21 and causes the VCSEL projector units 21 to simultaneously emit light beams. Further, the drive-signal output unit 238a outputs a drive signal having a predetermined voltage waveform at a predetermined light-emission frequency, thus to temporally modulate (temporally control) the light emission of the VCSEL projector units 21. In the present embodiment, the drive-signal output unit 238a outputs a drive signal having a rectangular wave or a sine wave at a frequency of about MHz to the VCSEL projector units 21 at a predetermined timing. This is only one example.

The light-receiving processing unit 239 includes at least a phase-signal input unit 239a, a distance-image acquisition unit 239b, a storage unit 239c, and a distance-image combining unit 239d as functions of the image-capturing device 100.

The phase-signal input unit 239a is implemented by the sensor I/F 236 to receive a phase signal output from the TOF photosensor unit 61. The phase-signal input unit 239a serves to receive a phase signal for each of the two-dimensionally arranged pixels in the TOF photosensor unit 61. Further, the phase-signal input unit 239a outputs the received phase signal to the distance-image acquisition unit 239b. In the present embodiment, the TOF photosensor unit 61 is connected to the phase-signal input unit 239a. In this case, the phase-signal input unit 239a outputs four phase signals for the TOF optical systems 71A, 71B, 71C, and 71D.

The distance-image acquisition unit 239b acquires a distance-image data for the distance between the image-capturing device 100 and the object, based on the phase signal for each pixel from the TOF photosensor unit 61, input from the phase-signal input unit 239a. Herein, the distance image refers to an image in which pieces of distance data acquired on a pixel-by-pixel basis are two-dimensionally arranged at corresponding pixel positions. For example, the distance image is an image generated with luminance data converted from the distance data. The distance-image acquisition unit 239b outputs the acquired four pieces of distance-image data to the storage unit 239c.

The storage unit 239c is implemented by, for example, the RAM 233, and temporarily stores the distance image (four pieces of distance image data) received from the distance-image acquisition unit 239b.

The distance-image combining unit 239d reads the four pieces of distance image data temporarily stored in the storage unit 239c, and combines the pieces of distance image data to generate one spherical distance image data.

The distance-image combining unit 239d is implemented by the CPU 231 executing a control program. However, no limitation is intended thereby. In some embodiments, a part or the entirety of the distance-image combining unit 239d may be implemented by dedicated hardware designed to execute similar functions, for example, semiconductor integrated circuits such as an application specific integrated circuit (ASIC), a digital signal processor (DSP), and a field programmable gate array (FPGA), or typical circuit modules.

The RGB image processing unit 241 includes an RGB image input unit 241a, an RGB image storage unit 241b, and an RGB image combining unit 241c.

The RGB image input unit 241a inputs an RGB image output from the CMOS photosensor unit 30. For example, the RGB image input unit 241a serves to receive, from the CMOS photosensor unit 30, an RGB signal for each of the two-dimensionally arranged pixels in the CMOS photosensor unit 30. The RGB image input unit 241a outputs the received RGB image (signal) to the RGB image storage unit 241b (in the present embodiment, since the two CMOS photosensor units 30R and 30L are connected to the RGB image processing unit 241, two RGB images are output from the RGB image input unit 241a to the RGB image processing unit 241). The RGB image input unit 241a is implemented by the RGB sensor I/F 240, for example.

The RGB image storage unit 241b is implemented by, for example, the RAM 233, and temporarily stores the RGB image input from the RGB image input unit 241a.

The RGB image combining unit 241c reads two pieces of RGB image data temporarily stored in the RGB image storage unit 241b, and combines the two pieces of RGB image data to generate a single spherical RGB image (image data). The RGB image combining unit 241c is implemented when the CPU 231 executing a control program. However, no limitation is intended thereby. In some embodiments, a part or the entirety of the RGB image combining unit 241c may be implemented by dedicated hardware designed to execute similar functions, for example, semiconductor integrated circuits such as an ASIC, a DSP, and an FPGA, or typical circuit modules.

In the above description, the configuration in FIG. 18 is built in the image-capturing device 100, but the configuration is not limited to this example. For example, the configuration in FIG. 18 may be included in an external information processing apparatus that is communicably connectable to the image-capturing device 100.

In the present embodiment described above, the photosensors (the TOF optical systems 71A, 71B, 71C, and 71D) outnumber the phototransmitters (the VCSEL projector units 21F and 21B) to cover the range to be measured. This configuration allows upsizing of the light source of each phototransmitter to emit higher-intensity light. This enables reception of a sufficient amount of light even reflected from a distant object or a low-reflective object, and thus achieves a higher measurement accuracy. Further, in the present embodiment, the photosensors outnumber the phototransmitters to cover the range to be measured, so as to allow each photosensor to have a smaller angle of view to receive light. This configuration allows each photosensor to have a longer focal length and a larger F-number lens, and thus achieves an increase in the accuracy of measurement of a distance to a distant object. In short, the configuration according to an embodiment of the present disclosure uses photosensors more than phototransmitters and achieves higher intensities of light emitted from the phototransmitters, a longer focal length of the photosensors, and higher distance measurement accuracy with a limited size of the apparatus.

### Second Embodiment

A second embodiment is described below.

The second embodiment differs from the first embodiment in that the TOF photosensor unit is divided into two upper and lower parts, and a VCSEL projector unit and a CMOS photosensor unit are disposed between the two parts. In the following description of the second embodiment, the description of the same portions as those of the first embodiment will be omitted, and portions different from those of the first embodiment will be described.

In the image-capturing device 100 as illustrated in FIG. 16, the outermost lens of the VCSEL optical system 23F is disposed on the right (i.e., the +Z-side in FIG. 16) of the outermost lens of the TOF optical system 71B to allow the VCSEL optical system 23 to emit light with an upper light-emitting range of a hemisphere (2π steradians). In this arrangement, E1 is greater than D1 (E1 > D1) where E1 denotes a diameter of a circle passing through the points furthest from the X-axis, on the outermost lenses of the VCSEL optical systems 23F and 23B, respectively, and D1 denotes a diameter of a circle passing through the points furthest from the X-axis, on the outermost lenses of the TOF optical systems 71B, 71C, and 71D, respectively. This likely causes upsizing of the image-capturing device 100 along the Z-axis.

Further, in the image-capturing device 100 in FIG. 16, the lower angle of view θtof3 of a light beam to be received by the TOF optical system 71B is set to prevent the light beam from being partly blocked by the VCSEL optical system 23F. Since the angle of view θtof3 is less than or equal to approximately 60 degrees (θtof3 ≤ 60 degrees), the dead spot A tends to be large. As a result, even when the angle of view θvcsel2 (the light-emitting range) on the lower side of the VCSEL optical system 23F is set to greater than 90 degrees (θvcsel2 > 90 degrees), the image-capturing range is defined by the dead spot A on the lower side of the TOF optical system 71B. In such a case, the image-capturing device 100 fails to capture an image of the entire lower hemispherical range.

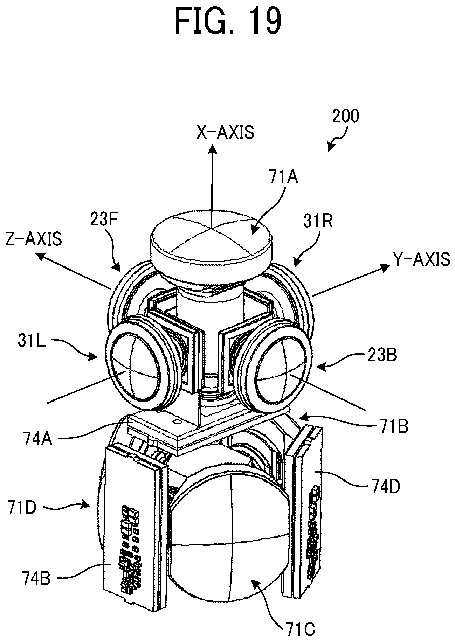

FIG. 19 is an enlarged view of optical systems of an image-capturing device 200 according to the second embodiment.

In the image-capturing device 200 as illustrated in FIG. 19 according to the second embodiment, the TOF photosensor unit is divided into two upper and lower parts, and VCSEL projector units (VCSEL optical systems 23F and 23B) and CMOS photosensor units (CMOS optical systems 31R and 31L) are disposed between the two parts. More specifically, in the image-capturing device 200, the TOF optical system 71A is disposed in the first stage, the TOF optical systems 71B, 71C, and 71D are disposed in the third stage, and the VCSEL optical systems 23F and 23B and the CMOS optical systems 31R and 31L are disposed in the second state between the first state and the third stage. In other words, the phototransmitters (the VCSEL optical systems 23F and 23B) are between the at least one photosensor (the TOF optical system 71A) and the at least two photosensors (the TOF optical systems 71B and 71C) of the photosensors (71A to 71D) excluding the at least one photosensors (the TOF optical system 71A).

In the image-capturing device 200, light scattered and reflected from an external object after emitted from the VCSEL optical systems 23F and 23B to the object reaches the TOF sensors on the TOF sensor substrates 74A to 74D through the TOF optical systems 71A to 71D.

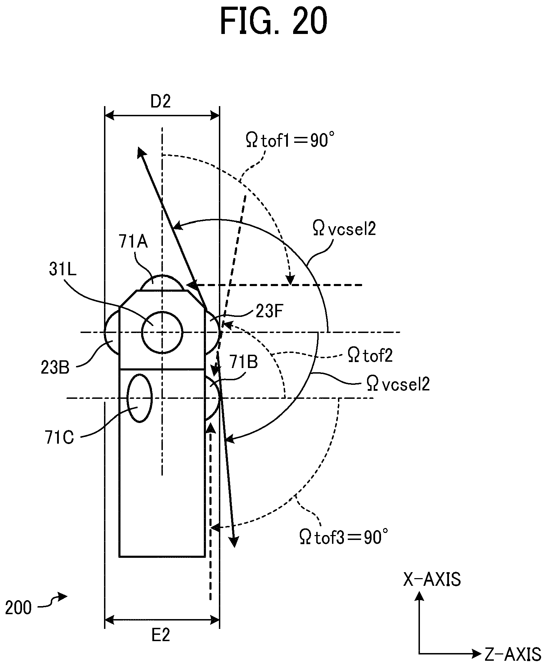

FIG. 20 is an illustration of an angle of view of a VCSEL optical system 123. FIG. 20 schematically illustrates light rays at the extreme peripheral angle of view in a vertical cross section (Z-X cross-sectional plane) of the VCSEL optical system 23F and the TOF optical systems 71A and 71B. As illustrated in FIG. 20, at least one photosensor (the TOF optical system 71A) of the photosensors (the TOF optical systems 71A to 71D) has an optical axis perpendicular to an optical axis of each of at least two photosensors (the TOF optical systems 71B, 71C) of the photosensors (71A to 71D) excluding the at least one photosensor (the TOF optical system 71A). Further, the photosensors (the TOF optical systems 71A to 71D) outnumber the imagers (the CMOS optical systems 31R and 31L). The imagers (the CMOS optical systems 31R and 31L) are between the at least one photosensor (the TOF optical system 71A) and the at least two photosensors (the TOF optical systems 71B and 71C) of the photosensors (71A to 71D) excluding the at least one photosensors (the TOF optical system 71A). In FIG. 20, the TOF optical systems 71B, 71C, and 71D are rotated about the X-axis so that the optical axis of the TOF optical system 71B is parallel to the Z-axis.

In the image-capturing device 200 in FIG. 20, the upper light-emitting range of the VCSEL projector unit (the VCSEL optical systems 23F and 23B) is increased to have an extreme peripheral angle of view Ωvcsel2 of greater than 90 degrees, so as to cover a hemispherical range of 2π steradians. The image-capturing device 200 allows the TOF photosensor unit as a whole to cover the upper light-receivable range of a hemispherical range of 2π steradians, which is a combination of the upper light-receivable range with an angle of view Ωvcsel2 of each of the TOF optical systems 71B, 71C, and 71D and the light-receivable range of an angle of view Qvcsell of the TOF optical system 71A. Thus, the image-capturing device 200 is capable of capturing an image of the entire image-capturing range of the upper hemisphere.

In the image-capturing device 200 according to the present embodiment, only the TOF optical system 71A is disposed on the upper side of the VCSEL optical system 23F in the second stage. This configuration allows the relation that D2 is equal to E2 (D2 = E2) in FIG. 20 unlike the image-capturing device 100 according to the first embodiment. E2 denotes a diameter of a circle passing through the points furthest from the X-axis on the outermost lenses of the VCSEL optical systems 23F and 23B, and D2 denotes a diameter of a circle passing through the points furthest from the X-axis on the outermost lenses of the TOF optical systems 71B, 71C, and 71D. The configuration according to the present embodiment eliminates the need for increasing the size along the Z-axis and thus achieves downsizing of the image-capturing device 100.

In the image-capturing device 200 in FIG. 20, the lower angle of view Qtof2 of the extreme peripheral rays emitted from the VCSEL optical system 23F may be increased to a degree (Ωvcsel2 ≤ approximately 85 degrees) that prevents a light beam emitted from the VCSEL optical system 23F from being at least partly blocked by the TOF optical system 71B.

The image-capturing device 200 allows a light-receivable range of the TOF photosensor unit to have an angle of view of 90 degrees at the maximum in the Z-X cross-sectional plane because of the lower light-receivable range (of the angle of view Qtof3) of the TOF optical system 71B. Thus, the image-capturing device 200 is capable of capturing an image of the entire image-capturing range of the lower hemisphere by incorporating the light-receivable ranges of the TOF optical systems 71C and 71D.

The present embodiment allows capturing of an image over the entire image-capturing range. In this case, the range to be measured (or the image-capturing range) is a full-spherical range to which the phototransmitters (23F, 23B) emit the light beams.

In each of the above-described embodiments, the distance measurement apparatus (the image-capturing devices 100, 200) includes VCSEL projector units 21F and 21B as multiple phototransmitters, TOF optical systems 71 (71A, 71B, 71C, 71D) as multiple photosensors, CMOS photosensor units 30R and 30L as multiple imagers, and a distance-measurement control unit 230 that performs distance-measurement calculation, which are formed as a single integrated unit. However, the distance-measurement apparatus is not limited to such a single integrated unit.

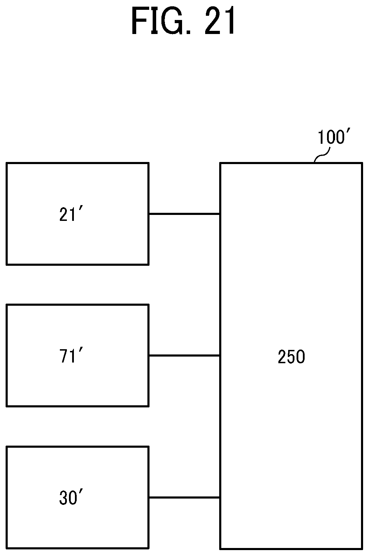

Alternatively, as illustrated in FIG. 21, a distance-measurement system 100' is configured by connecting the following devices to each other via a network: a projector unit 21' (a projector) including VCSEL projector units 21F and 21B as multiple phototransmitters, a TOF photosensor unit 71' (photosensor unit, photosensor device) including TOF optical systems 71 (71A, 71B, 71C, 71D) as multiple photosensors, a CMOS imaging unit 30' (an imager unit) including CMOS photosensor units 30R and 30L as multiple imagers, and a distance-measurement control unit 250 including a CPU and a memory to perform distance-measurement calculation. These devices are separate from each other.

### Aspect 1

According to Aspect 1, a distance measurement apparatus (100, 200) includes: multiple phototransmitters (21F, 21B) configured to emit light beams to a range to be measured; multiple photosensors (71A to 71D) each configured to receive a light beam reflected from an object within the range to be measured; and a distance-measurement control unit (230) configured to calculate a distance to the object based on time of light emission of each of the phototransmitters (21F, 21B) and time of light reception of each of the photosensors (71A to 71D). The photosensors outnumber the phototransmitters (21F, 21B).

### Aspect 2

In the distance measurement apparatus (100, 200) according to Aspect 1, each of the photosensors (71A to 71D) has an angle of view smaller than a light-emitting range of each of the phototransmitters (21F, 21B).

### Aspect 3

In the distance measurement apparatus (100, 200) according to Aspect 1 or 2, at least one photosensor (71A) of the photosensors (71A to 71D) has an optical axis perpendicular to an optical axis of each of at least two photosensors (71B, 71C) of the photosensors (71A to 71D) excluding the at least one photosensor (71A). The phototransmitters (23F, 23B) each have an optical axis perpendicular to the optical axis of the at least one photosensor (71A).

### Aspect 4

The distance measurement apparatus (100, 200) according to any one of Aspects 1 to 3, further includes multiple imagers (30R, 30L) each configured to capture an image of a view within the range to be measured.

### Aspect 5

The distance measurement apparatus (100, 200) according to Aspect 3, further includes multiple imagers (31R, 31L) each configured to capture an image of a view within the range to be measured. The photosensors (71A to 71D) outnumber the imagers (31R, 31L). The imagers (31R, 31L) each have an optical axis perpendicular to the optical axis of the at least one photosensor (71A).

### Aspect 6

In the distance measurement apparatus (100, 200) according to Aspect 1 or 2, at least one photosensor (71A) of the photosensors (71A to 71D) has an optical axis perpendicular to an optical axis of each of at least two photosensors (71B, 71C) of the photosensors (71A to 71D) excluding the at least one photosensor (71A). The phototransmitters (23F, 23B) are between the at least one photosensor (71A) and the at least two photosensors (71B, 71C).

### Aspect 7

The distance measurement apparatus (100, 200) according to Aspect 6, further includes multiple imagers (31R, 31L) each configured to capture images of views within the range to be measured. The photosensors (71A to 71D) outnumber the imagers (31R, 31L). The imagers (31R, 31L) are between the at least one photosensor (71A) and the at least two photosensors (71B, 71C).

### Aspect 8

The distance measurement apparatus (100, 200) according to any one of Aspects 1 to 7, each of the photosensors (71A to 71D) receives light beams from at least two of the phototransmitters (21F, 21B).

### Aspect 9

In the distance measurement apparatus (100, 200) according to any one of Aspects 1 to 8, the range to be measured is a full-spherical range.

### Aspect 10

A distance measurement system (100') includes a projector unit (21') including multiple phototransmitters (21F, 21B) configured to emit light beams to a range to be measured; a photosensor unit (71') including multiple photosensors (71A to 71D) each configured to receive a light beam reflected from an object within the range to be measured; and a distance-measurement control unit (250) configured to calculate a distance to the object based on time of light emission of each of the phototransmitters (21F, 21B) and time of light reception of each of the photosensors (71A to 71D). The photosensors (71A to 71D) outnumber the phototransmitters (21F, 21B).

### Aspect 11

The distance measurement system (100') according to Aspect 10, further includes an imager unit (30') including multiple imagers (30L, 30R) each configured to capture an image of a view of the range to be measured.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A distance measurement apparatus (100, 200) comprising:
multiple phototransmitters (21F, 21B) configured to emit light beams to a range to be measured;
multiple photosensors (71A to 71D) each configured to receive a light beam reflected from an object within the range to be measured; and
a distance-measurement control unit (230) configured to calculate a distance to the object based on time of light emission of each of the phototransmitters (21F, 21B) and time of light reception of each of the photosensors (71A to 71D),
the photosensors outnumbering the phototransmitters (21F, 21B).

2. The distance measurement apparatus (100, 200) according to 1,
wherein each of the photosensors (71A to 71D) has an angle of view smaller than a light-emitting range of each of the phototransmitters (21F, 21B).

3. The distance measurement apparatus (100, 200) according to claim 1 or 2,
wherein at least one photosensor (71A) of the photosensors (71A to 71D) has an optical axis perpendicular to an optical axis of each of at least two photosensors (71B, 71C) of the photosensors (71A to 71D) excluding the at least one photosensor (71A), and
wherein the phototransmitters (23F, 23B) each have an optical axis perpendicular to the optical axis of the at least one photosensor (71A).

4. The distance measurement apparatus (100, 200) according to any one of claims 1 to 3, further comprising multiple imagers (30R, 30L) each configured to capture an image of a view within the range to be measured.

5. The distance measurement apparatus (100, 200) according to claim 3, further comprising multiple imagers (31R, 31L) each configured to capture an image of a view within the range to be measured;
wherein the photosensors (71A to 71D) outnumber the imagers (31R, 31L), and
wherein the imagers (31R, 31L) each have an optical axis perpendicular to the optical axis of the at least one photosensor (71A).

6. The distance measurement apparatus (100, 200) according to claim 1 or 2,
wherein at least one photosensor (71A) of the photosensors (71A to 71D) has an optical axis perpendicular to an optical axis of each of at least two photosensors (71B, 71C) of the photosensors (71A to 71D) excluding the at least one photosensor (71A), and
wherein the phototransmitters (23F, 23B) are between the at least one photosensor (71A) and the at least two photosensors (71B, 71C).

7. The distance measurement apparatus (100, 200) according to claim 6, further comprising multiple imagers (31R, 31L) each configured to capture images of views within the range to be measured;
wherein the photosensors (71A to 71D) outnumber the imagers (31R, 31L), and
wherein the imagers (31R, 31L) are between the at least one photosensor (71A) and the at least two photosensors (71B, 71C).

8. The distance measurement apparatus (100, 200) according to any one of claims 1 to 7,
wherein each of the photosensors (71A to 71D) receives light beams from at least two of the phototransmitters (21F, 21B).

9. The distance measurement apparatus (100, 200) according to any one of claims 1 to 8,
wherein the range to be measured is a full-spherical range.

10. A distance measurement system (100') comprising:
a projector unit (21') including multiple phototransmitters (21F, 21B) configured to emit light beams to a range to be measured;
a photosensor unit (71') including multiple photosensors (71A to 71D) each configured to receive a light beam reflected from an object within the range to be measured; and
a distance-measurement control unit (250) configured to calculate a distance to the object based on time of light emission of each of the phototransmitters (21F, 21B) and time of light reception of each of the photosensors (71A to 71D),
wherein the photosensors (71A to 71D) outnumber the phototransmitters (21F, 21B).

11. The distance measurement system (100') according to claim 10, further comprising an imager unit (30') including multiple imagers (30L, 30R) each configured to capture an image of a view of the range to be measured.
